# EUROPÄISCHE PATENTSCHRIFT

(11) **EP 1 313 205 B1**
(45) Veröffentlichungstag und Bekanntmachung des Hinweises auf die Patenterteilung: **29.12.2004**
(21) Anmeldenummer: 02023860.6
(22) Anmeldetag: 24.10.2002
(51) Int. Cl.: H02M 5/257, H05B 39/04

(54) **Dimmer mit Lastart-Erkennung**
Dimmer with load type detection
Gradateur avec détection de type de charge

(30) Priorität: 17.11.2001 DE 10156686
(43) Veröffentlichungstag der Anmeldung: 21.05.2003
(73) Patentinhaber: Merten GmbH & Co. KG, 51674 Wiehl (DE)
(72) Erfinder: Becker, Jürgen, 51645 Gummersbach (DE)
(74) Vertreter: Selting, Günther, Dipl.-Ing.

(56) Entgegenhaltungen:
- EP-A- 0 618 667
- EP-A- 0 923 274
- DE-A- 19 751 828
- GB-A- 2 200 006

## Beschreibung

Die Erfindung betrifft einen Dimmer mit Lastart-Erkennung zur Ermittlung, ob die durch den Dimmer gesteuerte Last eine induktive, kapazitive oder ohmsche Last ist.

In EP 0 618 667 B1 ist erläutert, dass zur Steuerung der Lasten entweder mit einer Phasenanschnittsteuerung oder einer Phasenabschnittsteuerung gearbeitet wird. Ein Phasenanschnitt wird durch eine Verzögerung des Einschaltens der Last erreicht und endet beim Nulldurchgang der jeweiligen Wechselstromhalbwelle. Beim Phasenabschnitt erfolgt keine Zündverzögerung, jedoch eine Abschaltung vor dem Ende der Halbwelle. Die Impedanzen der durch einen Dimmer gesteuerten Beleuchtungseinrichtungen, kann neben ihrem ohmschen Anteil auch einen kapazitiven bzw. induktiven Anteil enthalten. Um hohe Abschaltspannungen zu vermeiden, müssen Lasten mit induktiven Verhalten im Phasenanschnitt betrieben werden und um hohe Einschaltströme zu vermeiden, müssen Lasten mit kapazitiven Verhalten im Phasenabschnitt betrieben werden. Die Lastart wird dadurch ermittelt, dass die Last mit einem kurzen Stromimpuls versorgt wird. Ein Lastartdetektor erkennt die beim Abschalten des Stromimpulses an der Last entstehende Abschaltspannung und ermittelt dadurch, ob es sich um eine induktive Last handelt. Zwischen kapazitiven und ohmschen Lasten kann nicht unterschieden werden.

Auch bei einem Universaldimmer nach EP 0 923 274 A2 wird ein Schaltimpuls ausgewertet, der beim Abschalten einer induktiven Last in Phasenabschnittsteuerung auftritt.

Aus DE 197 51 828 A1 ist ein Dimmer mit Lastart-Erkennung bekannt, bei dem die Last zu einem festgelegten Zeitpunkt vor dem erwarteten Netzspannungs-Nulldurchgang eingeschaltet und im Strom-Nulldurchgang wieder ausgeschaltet wird. Dabei wird die Zeitspanne zwischen Ein- und Ausschalten der Last gemessen und mit einem vorher ermittelten Normwert verglichen. Bei induk-. tiven Lasten verschiebt sich der erwartete Zeitpunkt des Ausschaltens. Um diesen Effekt hervorzuheben, wird der Halbleiterschalter in der darauffolgenden Netzhalbwelle nicht eingeschaltet, sondern erst in der ungradzahligen Vielfachen der Netzhalbwelle. Dadurch wird im Lastkreis ein Gleichstromanteil erzeugt, der es ermöglicht, die Art der angeschlossenen Last zu erkennen.

Der vorliegenden Erfindung liegt die Aufgabe zugrunde, einen Dimmer mit Lastart-Erkennung zu schaffen, der eine hohe Erkennungsempfindlichkeit aufweist.

Die Lösung dieser Aufgabe erfolgt erfindungsgemäß mit den im Patentanspruch 1 angegebenen Merkmalen. Hiernach enthält der Dimmer eine Steuereinheit, die
- den Lastschalter periodisch ein- und ausschaltet,
- in einer Teilperiode bei eingeschaltetem Lastschalter einen der Strom-Nulldurchgänge als Startzeit und in der folgenden Teilperiode einen der Spannungs-Nulldurchgänge als Stopzeit eines ersten Intervalls bestimmt,
- in einer Teilperiode mit ausgeschaltetem Lastschalter einen der Spannungs-Nulldurchgänge als Startzeit und in der folgenden Teilperiode einen der Strom-Nulldurchgänge als Stopzeit eines zweiten Intervalls bestimmt,
- die Längen des ersten und des zweiten Intervalls vergleicht und daraus die Lastart bestimmt.

Bei dem erfindungsgemäßen Dimmer führt die Steuereinheit zunächst einen Testlauf durch, bei dem der Lastschalter periodisch ein- und ausgeschaltet wird. Dadurch ergeben sich Teilperioden mit Wechselspannung an der Gleichrichterschaltung und Teilperioden mit Wechselstrom durch die Gleichrichterschaltung. Bei induktiver Last entsteht ein Nacheilen der Wechselstromkurve gegenüber einer Wechselstromkurve bei ohmscher Last. Dadurch wird der Strom-Nulldurchgang, der das erste Intervall beendet, verzögert, so dass das erste Intervall verkürzt wird. Das zweite Intervall beginnt dagegen regulär mit dem betreffenden Spannungs-Nulldurchgang, beispielsweise am Ende einer Halbperiode, und sein Ende wird durch die induktive Last verzögert, so dass sich das zweite Intervall verlängert. Durch einen Vergleich der Längen des ersten und des zweiten Intervalls kann die Lastart festgestellt werden. Ist das zweite Intervall länger als das erste Intervall, handelt es sich um eine induktive Last. Ist dagegen das zweite Intervall kürzer als das erste Intervall, handelt es sich um eine kapazitive Last. Im Falle einer ohmschen Last haben beide Intervalle gleiche Längen.

Die Längen der beiden Intervalle können durch die Steuereinheit subtrahiert werden. Dies hat den Vorteil, dass eine Zeitdauer, die'durch die induktive oder kapazitive Wirkung hervorgerufen wird, verdoppelt wird. Somit wird eine höhere Empfindlichkeit der Lastart-Erkennung erreicht.

Die Empfindlichkeit kann noch weiter gesteigert werden, wenn die Steuereinheit das Vergleichsergebnis oder die Längen des ersten und des zweiten Intervalls über mehrere Perioden akkumuliert. Dies erleichtert das Erkennen einer Phasenverschiebung. Es besteht auch die Möglichkeit aus dem Ergebnis der Akkumulierung und der Anzahl der Perioden eine Mittelwertbildung durchzuführen. Hierdurch werden Verfälschungen, die in einzelnen Perioden des Testlaufs vorkommen können, eliminiert.

Im folgenden wird unter Bezugnahme auf die Zeichnungen ein Ausführungsbeispiel der Erfindung näher erläutert.

Es zeigen:
- Fig. 1: ein schematisches Blockschaltbild der Lastart-Erkennungsschaltung, und
- Fig. 2: ein Diagramm der zeitlichen Verläufe von Spannungen und Strömen.

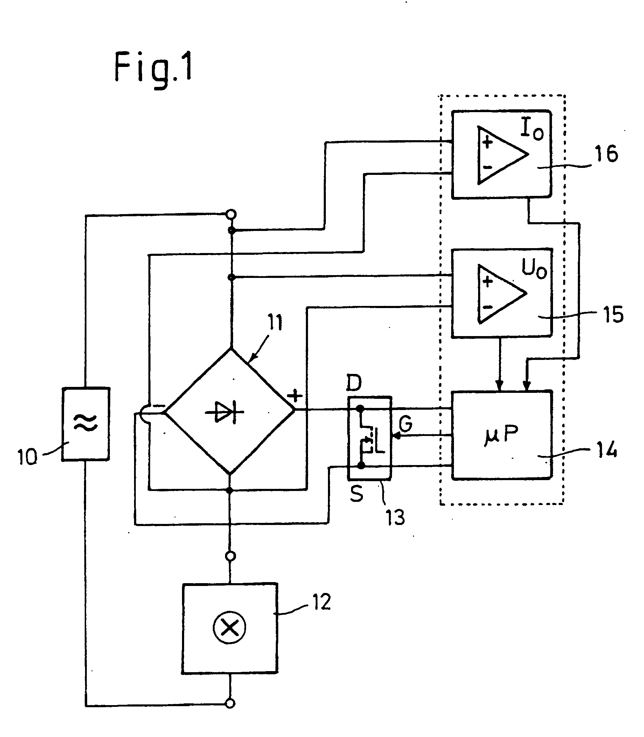

Gemäß Fig. 1 ist an eine Netzspannungsquelle, die eine Netzspannung U_{Netz} liefert, eine Reihenschaltung aus einer Gleichrichterschaltung 11 und einem Verbraucher 12 geschaltet. Die Gleichrichterschaltung 11 ist ein Doppelweggleichrichter, der aus der Netzspannung eine pulsierende Gleichspannung an den Ausgangsklemmen, die mit Plus und Minus bezeichnet sind, erzeugt.

An den Ausgang der Gleichrichterschaltung 11 ist ein Schalter 13 in Form eines MOSFET angeschlossen, dessen Hauptanschlüsse mit S (Source) und D (Drain) bezeichnet sind. Die Steuerung des Transistors erfolgt über die Gate-Elektrode G. Ist der Schalter 13 leitend, dann entsprechen die Nulldurchgänge über den Dioden der Gleichrichterschaltung den Nulldurchgängen des Laststroms. Ist der Schalter 13 nicht leitend, ist die Spannung über der Gleichrichterschaltung gleich der Netzspannung.

An den Ausgang der Gleichrichterschaltung 11 ist eine Steuereinheit 14 in Form eines Mikroprozessors angeschlossen, die dadurch ihre Betriebsspannung erhält. Die Steuereinheit 14 steuert außerdem das Gate G des Lastschalters 13 in noch zu erläuternder Weise.

Die Eingangsklemmen der Gleichrichterschaltung 11 sind mit einer Einrichtung 15 zur Erkennung von Spannungs-Nulldurchgängen der Netzspannung verbunden. Die Einrichtung 15 enthält einen Differenzverstärker, der die Nulldurchgänge Uₒ erkennt und dann jeweils einen Impuls an die Steuereinheit 14 liefert.

Die Gleichrichterschaltung ist ferner mit einer Einrichtung 16 zur Erkennung von Laststrom-Nulldurchgängen Iₒ des durch die Gleichrichterschaltung 11 fließenden Laststromes verbunden. Die Erkennung der Strom-Nulldurchgänge erfolgt durch Überwachung der Durchgangsspannung der Dioden der Gleichrichterschaltung. Auch die Einrichtung 16 zur Erkennung von Nulldurchgängen liefert entsprechende Erkennungssignale an die Steuereinheit 14.

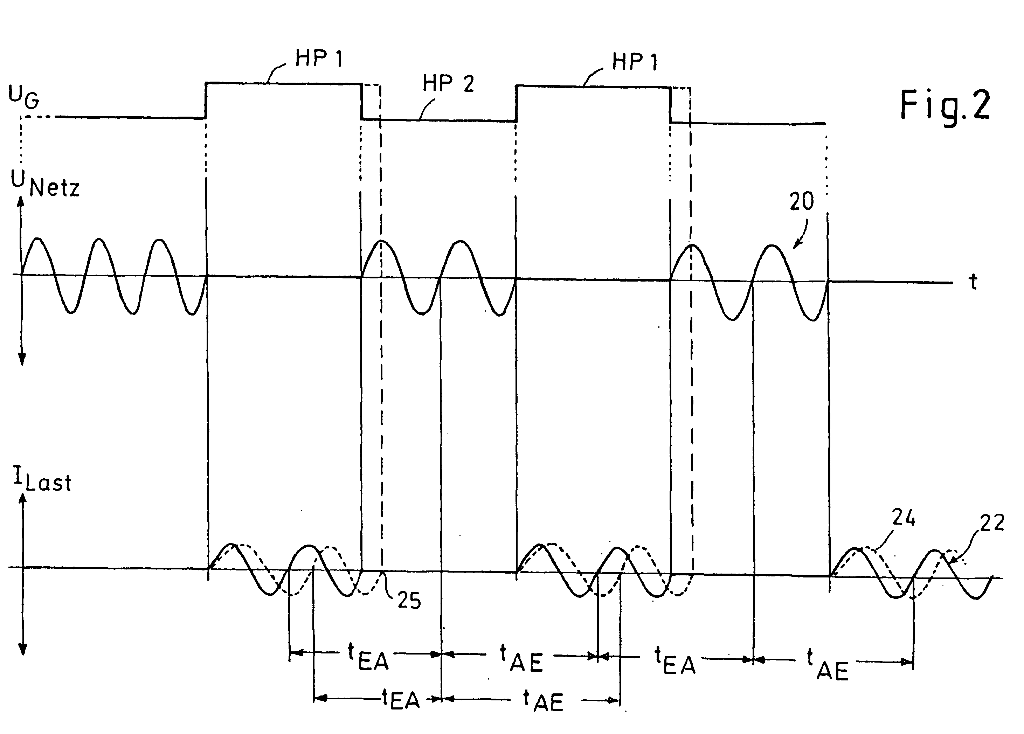

In Fig. 2 ist der zeitliche Verlauf der Gatespannung U_{G} am Gate G des Lastschalters 13 während eines Testlaufs dargestellt, welcher von der Steuereinheit 14 zur Ermittlung der Lastart durchgeführt wird. Bei dem Testlauf wird der Lastschalter periodisch ein- und ausgeschaltet, wobei Teilperioden HP1 der Einschaltung mit Teilperiode HP2 der Ausschaltung des Lastschalters abwechseln. Ist der Lastschalter ausgeschaltet, also in den Teilperioden HP2, steht am Eingang der Gleichrichterschaltung 11 die Netzspannung U_{Netz} an. In den Teilperioden HP1 der Einschaltung des Lastschalters ist die Eingangsspannung der Gleichrichterschaltung Null. Dies ist durch die Spannungskurve 20 in Fig. 2 verdeutlicht, die den zeitlichen Verlauf der Spannung am Eingang der Gleichrichterschaltung angibt.

Die unterste Kurve 22 in Fig. 2 gibt den zeitlichen Verlauf des Laststroms I_{Last} an. In den Teilperioden HP1 hat der Laststrom generell sinusförmigen Verlauf und in den Teilperioden HP2 ist er Null.

Eine Teilperiode HP1 beginnt unter Steuerung durch die Steuereinheit 14 zum Zeitpunkt eines Nulldurchgangs der Netzspannung U_{Netz}. Genau zum Zeitpunkt dieses Nulldurchgangs wird der Lastschalter 13 in den leitenden Zustand geschaltet, so dass die gesamte Spannung über der Last 12 (Fig. 1) abfällt und die Spannung an der Gleichrichterschaltung null wird. Gleichzeitig fließt ein Laststrom, der durch die durchgezogene Kurve 22 bezeichnet ist. Die Nulldurchgänge dieses Laststroms werden von der Einrichtung 16 erkannt und von der Steuereinheit 14 gezählt. Im zweiten Nulldurchgang nach dem Beginn der ersten Teilperiode HP1 wird die Startzeit eines ersten Intervalls t_{EA} festgelegt. Die Steuereinheit 14 misst von dieser Startzeit an die Intervalldauer. Die Stopzeit des Intervalls t_{EA} ist beim zweiten Spannungs-Nulldurchgang der zweiten Teilperiode HP2 erreicht.

Die zweite Teilperiode HP2 beginnt, wenn der Laststrom I_{Last} den vierten Nulldurchgang erreicht. Dann wird der Lastschalter 13 in den Auszustand geschaltet. In der zweiten Teilperiode HP2 werden die Spannungs-Nulldurchgänge der Spannung U_{Netz} gezählt. Die zweite Teilperiode endet mit dem vierten Nulldurchgang der Netzspannung.

Die Anzahl der Nulldurchgänge, nach der jeweils eine Änderung des Schaltzustandes durchgeführt wird, kann natürlich variieren. Damit kein Gleichspannungsanteil an der Last ansteht, sollte generell eine gerade Anzahl von Nulldurchgängen gewählt werden. Ferner sollte die Anzahl der Spannungs- und der Stromnulldurchgänge in den jeweiligen Schaltzuständen gleich sein. Im vorliegenden Fall wird zu jedem vierten Nulldurchgang der Schaltzustand geändert. Auch der Start- bzw. der Stopzeitpunkt der Intervalle tEA bzw. tAE kann zu einem beliebigen konstanten Nulldurchgang erfolgen.

Das zweite Intervall t_{AE} beginnt mit dem zweiten Spannungs-Nulldurchgang in der zweiten Teilperiode HP2 und endet mit dem zweiten Strom-Nulldurchgang des Laststroms in der darauffolgenden ersten Teilperiode HP1.

Wie in Fig. 2 durch die durchgezogene Kurve 22 angegeben ist, die den Laststrom I_{Last} bei ohmscher Last wiedergibt, sind in diesem speziellen Lastfall die Dauern der Intervalle t_{EA} und t_{AE} einander gleich.

In Fig. 2 gibt die gestrichelte Kurve 24 den Laststrom I_{Last} bei induktiver Belastung an, also wenn die Last 12 (Fig. 1) eine induktive Komponente hat. Durch die Induktivität wird der Laststrom verzögert, d.h. er erhält eine Phasenverschiebung. Zwar beginnt der Aufbau des Laststroms am Anfang der ersten Teilperiode HP1, jedoch verzögert sich der Anstieg und der Laststrom folgt dann wieder einer Sinuskurve, die jedoch der durchgezogenen Kurve nacheilt. Dies bedeutet, dass der letzte (vierte) Nulldurchgang 25 bei dem der Übergang auf die zweite Teilperiode HP2 erfolgt, später stattfindet, wenn die Netzspannung U_{Netz} bereits einen höheren Wert erreicht hat. Danach entsteht nach dem zweiten Nulldurchgang der Netzspannung die Stopzeit des ersten Intervalls t_{EA}, die gleich der Startzeit des zweiten Intervalls t_{AE} ist. Die Stopzeit des zweiten Intervalls t_{AE} ist der zweite Nulldurchgang des Laststroms. In Fig. 2 ist die induktiv hervorgerufene zeitliche Verzögerung des Laststroms in der Kurve 24 übertrieben dargestellt, um die Verhältnisse zu verdeutlichen.

Die Steuereinheit 14 misst die Dauer des ersten Intervalls und des zweiten Intervalls und bildet dann das Vergleichsergebnis t_{AE} - t_{EA}. Wenn dieser Wert positiv ist, wenn also t_{AE} größer ist als t_{EA}, wird die Last als "induktiv" angenommen. Ist der Wert dagegen negativ, also wenn t_{EA} größer ist als t_{AE}, wird die Last als "kapazitiv" angenommen. Bei kapazitiver Last eilt nämlich der Laststrom der Kurve 22 bei ohmscher Last voraus. Dadurch beginnt das erste Intervall t_{EA} früher als im Fall der Kurve 22 und das zweite Intervall t_{AE} endet früher als bei Kurve 22.

Durch die Differenzbildung wird die Abweichung gegenüber einer ohmschen Last verdoppelt. Es ist auch möglich, den Differenzwert über mehrere Perioden der Umschaltung des Lastschalters zu akkumulieren und dann für die Bestimmung der Lastart das Kumulationsergebnis oder einen Mittelwert zu benutzen.

Wenn während des Testlaufs, der sich über eine bestimmte Anzahl von Perioden erstreckt, eine induktive Last ermittelt wurde, wird der Dimmer anschließend in Phasenanschnittsteuerung betrieben. Wurde eine kapazitive Last oder eine ohmsche Last festgestellt, wird der Dimmer in Phasenabschnittsteuerung betrieben.

## Patentansprüche

1. Dimmer mit Lastart-Erkennung mit einer Gleichrichterschaltung (11), einem mit dem Ausgang der Gleichrichterschaltung verbundenen Lastschalter (13), Einrichtungen (14,15) zur Erkennung der Spannungs-Nulldurchgänge und der Strom-Nulldurchgänge am Ausgang der Gleichrichterschaltung (11) und mit einer Steuereinheit (14), wobei die Steuereinheit
- den Lastschalter (13) periodisch ein- und ausschaltet,
- in einer Teilperiode (HP1) mit eingeschaltetem Lastschalter (13) einen der Strom-Nulldurchgänge als Startzeit und in der folgenden Teilperiode einen der Spannungs-Nulldurchgänge als Stopzeit eines ersten Intervalls (T_{EA}) bestimmt,
- in einer Teilperiode (HP2) mit ausgeschaltetem Lastschalter (13) einen der Spannungs-Nulldurchgänge als Startzeit und in der folgenden Teilperiode (HP1) einen der Strom-Nulldurchgänge als Stopzeit eines zweiten Intervalls (t_{AE}) bestimmt,
- die Längen des ersten und des zweiten Intervalls (t_{EA},t_{AE}) vergleicht und daraus die Lastart bestimmt.

2. Dimmer nach Anspruch 1, wobei die Steuereinheit (14) die Längen der Intervalle (t_{EA},t_{AE}) subtrahiert.

3. Dimmer nach Anspruch 1 oder 2, wobei die Steuereinheit (14) das Vergleichsergebnis oder die Längen des ersten und des zweiten Intervalls über mehrere Perioden akkumuliert.

4. Dimmer nach Anspruch 3, wobei aus dem Ergebnis der Akkumulierung und der Zahl der Perioden eine Mittelwertbildung erfolgt.

## Claims

1. Dimmer with load type detection comprising a rectifier circuit (11), a load switch (13) connected to the output of the rectifier circuit, means (14, 15) for detecting the voltage zero crossings and the current zero crossings at the output of the rectifier circuit (11), and a control unit (14), the control unit
periodically switching on and off the load switch (13),
in a partial period (HP1) with the load switch (13) switched on, determining one of the current zero crossings as the start time and, the following partial period, determining one of the voltage zero crossings as the stop time of a first interval (t_{EA}),
in a partial period (HP2) with the load switch (13) switched off, determining one of the voltage zero crossings as the start time and, the following partial period (HP1), determining one of the current zero crossings as the stop time of a second interval (t_{AE}),
comparing the durations of the first and the second interval (t_{EA}, t_{AE}) and determining the load type therefrom.

2. Dimmer of claim 1, wherein the control unit (14) subtracts the durations of the intervals (t_{EA}, t_{AE}).

3. Dimmer of claim 1 or 2, wherein the control unit (14) accumulates the comparison result or the durations of the first and second intervals over a plurality of periods.

4. Dimmer of claim 3, wherein an average value is formed from the result of the accumulation and the number of periods.

## Revendications

1. Gradateur avec détection de type de charge comprenant un circuit redresseur (11), un commutateur de charge (13) relié à la sortie du circuit redresseur (11), des dispositifs (14, 15) de détection des passages par zéro de la tension et des passages par zéro du courant au niveau de la sortie du circuit redresseur (11) et comprenant une unité de commande (14), dans lequel l'unité de commande :
- commute périodiquement le commutateur (13) en fermeture et en ouverture,
- détermine un des passages par zéro du courant dans une sous-période (HP1) où le commutateur (13) est fermé et un des passages par zéro de la tension dans la sous-période suivante respectivement en tant qu'instant de début et en tant qu'instant d'arrêt d'un premier intervalle (t_{EA}),
- détermine un des passages par zéro de la tension dans une sous-période (HP2) où le commutateur (13) est ouvert et un des passages par zéro du courant dans la sous-période suivante (HP1) respectivement en tant qu'instant de début et en tant qu'instant d'arrêt d'un deuxième intervalle (t_{AE}),
- compare les longueurs du premier et du deuxième intervalle (t_{EA},t_{AE}) et en conclut le type de charge.

2. Gradateur selon la revendication 1, dans lequel l'unité de commande (14) calcule la différence entre les longueurs des intervalles (t_{EA,} t_{AE}).

3. Gradateur selon la revendication 1 ou 2, dans lequel l'unité de commande (14) accumule le résultat de la comparaison ou les longueurs du premier et du deuxième intervalle sur plusieurs périodes.

4. Gradateur selon la revendication 3, dans lequel a lieu la formation d'une valeur moyenne à partir du résultat de l'accumulation et du décompte des périodes.
